# EUROPEAN PATENT APPLICATION

(11) **EP 1 619 425 A1**
(43) Date of publication of application: **25.01.2006**
(21) Application number: 05015421.0
(22) Date of filing: 15.07.2005
(51) Int. Cl.: F16J 15/08

(54) **Metal gasket**

(30) Priority: 23.07.2004 JP 2004215409
(71) Applicant: ISHIKAWA GASKET CO. LTD., Tokyo (JP)
(72) Inventor: Udagawa, Tsunekazu Ishikawa Gasket Co., Ltd., Utsunomiya-shi Tochigi-ken (JP)
(74) Representative: Gassner, Wolfgang

(57) **Abstract**

A metal gasket (1, 1A, 1B) for sealing between a cylinder head and a cylinder block of an engine includes a main bead (11) provided around a cylinder bore and a secondary bead (12) provided outside the main bead. The secondary bead (12) includes a protruding portion (12a) protruding toward the head bolt hole within a range of 30 degrees on both sides of a straight line connecting the center of the cylinder bore and a center of a head bolt hole surrounding the cylinder bore.

## Description

### Background of the Invention and Related Art Statement

The present invention relates to a metal gasket disposed between two members such as a cylinder head and a cylinder block of an engine for sealing the engine.

When joined surfaces of a cylinder head and a cylinder block (cylinder body) of an automobile engine (internal combustion engine) are sealed, a metal cylinder head gasket is disposed between the cylinder head and cylinder block for sealing combustion gas, coolant water, or lubricating oil.

Due to an aluminum base alloy as an engine material or thinning of the cylinders accompanied by a lightweight engine, there is a tendency of declining rigidity of the cylinder block and cylinder head. Accordingly, in an engine operation, these members are easily deformed, so that a sealing surface pressure around a cylinder bore (combustion chamber hole) may become uneven.

In a recent engine, especially, a deformation of a cylinder bore becomes a problem. When the deformation of the cylinder bore becomes large, burning of a piston and wearing of a cylinder occur, and friction resistance of a piston become large, thereby reducing a power.

When a head bolt is fastened to tighten a head gasket, a surface pressure near the head bolt becomes large with respect to sealing means such as a bead or folded portion, and an entire circumference of the cylinder bore has an uneven surface pressure. Accordingly, it is known that the deformation of the cylinder bore is increased by the tightening. Therefore, a metal gasket which can control an increase in deformation by fastening head bolts as little as possible is required. As a result, metal laminate gaskets directing to solve the above-mentioned problems is conventionally proposed.

As one example, a metal laminate gasket with a folded portion around a cylinder bore is proposed. A metal ring is disposed in the folded portion. The metal ring has a large width near a head bolt hole, so that the deformation of a cylinder can be controlled (for example, refer to the Patent Document 1).

Also, a metal laminate gasket with a folded portion around a cylinder bore is proposed. The folded portion has a large width near the head bolt hole, so that the deformation of the cylinder can be controlled (for example, refer to the Patent Document 2).

However, in the metal laminate gaskets, while the deformation of the cylinder due to tightening of the head bolts can be controlled, sealing performance may be damaged.
Patent Document 1: Japanese Patent No. 2875230
Patent Document 2: Japanese Patent No. 3290104

The present invention is proposed in order to solve the above-mentioned problems, and an object of the present invention is to provide a metal gasket which can control deformation of a cylinder by reducing an influence of a tightening force of the head bolt without affecting sealing performance for a cylinder bore.

Further objects and advantages of the invention will be apparent from the following description of the invention.

### Summary of Invention

In order to achieve the above-mentioned objects, according to the present invention, a metal gasket for sealing between a cylinder head and a cylinder block of an engine includes a main bead provided around a cylinder bore and a secondary bead provided outside the main bead. A part of the secondary bead protrudes toward the head bolt hole within a range of 30 degrees on both sides from a center of the cylinder bore in a plan view relative to a straight line connecting the center of the cylinder bore and a center of a head bolt hole surrounding the cylinder bore.

Alternatively, in order to achieve the above-mentioned objects, according to the present invention, a metal gasket for sealing between a cylinder head and a cylinder block of an engine includes a main bead provided around a cylinder bore and a secondary bead partially provided outside the main bead and protruding toward a head bolt hole within a range of 30 degrees on both sides from a center of the cylinder bore in the plan view relative to a straight line connecting the center of the cylinder bore and a center of the head bolt hole surrounding the cylinder bore.

Also, in the metal gasket, both ends of the secondary bead partially provided are joined to the main bead, respectively.

In the metal gasket, a part of the secondary bead protruding toward the head bolt hole has a shape of an arc, a triangle, a trapezoid, or a quadrilateral in the plane view.

When a head bolt is inserted into the head bolt hole and fastened, depending on a type of the metal gasket or a type of an engine, it is empirically known that a surface pressure of the main bead is specially increased at a portion within a range of 30 degrees on both sides from a center of the cylinder bore. Accordingly, the protruding portion of the secondary bead is provided within the range.

The present invention can be applied not only to the metal gasket with one metal substrate, but also to a laminate-type metal gasket with a number of laminated metal substrates.

According to the metal gasket of the invention, the secondary bead separated from the main bead provided around the cylinder bore, or the secondary bead diverged from the main bead, reduces an influence of a tightening force of the head bolt. As a result, without affecting sealing performance of the main bead, deformation of the cylinder due to the metal gasket can be reduced.

Especially, a part of the secondary bead protrudes toward the head bolt hole in the plan view, and a top of the protruding portion of the secondary bead is located near the head bolt hole where the influence of the tightening force of the head bolt is large. Accordingly, an effect of compressive resistance due to the secondary bead can be enhanced.

### Brief Description of the Drawings

Fig. 1 is a plan view showing a metal gasket according to a first embodiment of the present invention;
Fig. 2 is a partial plan view showing the metal gasket according to the first embodiment of the present invention;
Fig. 3 is a partial plan view showing a metal gasket according to a second embodiment of the present invention;
Fig. 4 is a partial plan view of a metal gasket according to a third embodiment of the present invention;
Fig. 5 is a partial plan view showing a triangular secondary bead;
Fig. 6 is a partial plan view showing a trapezoidal secondary bead; and
Fig. 7 is a partial plan view showing a rectangular secondary bead.

### Detailed Description of Preferred Embodiments

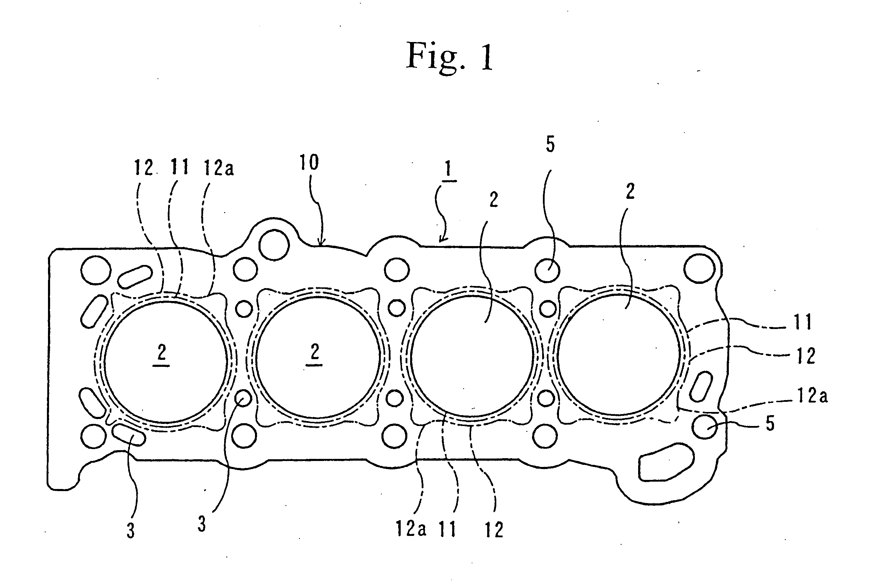

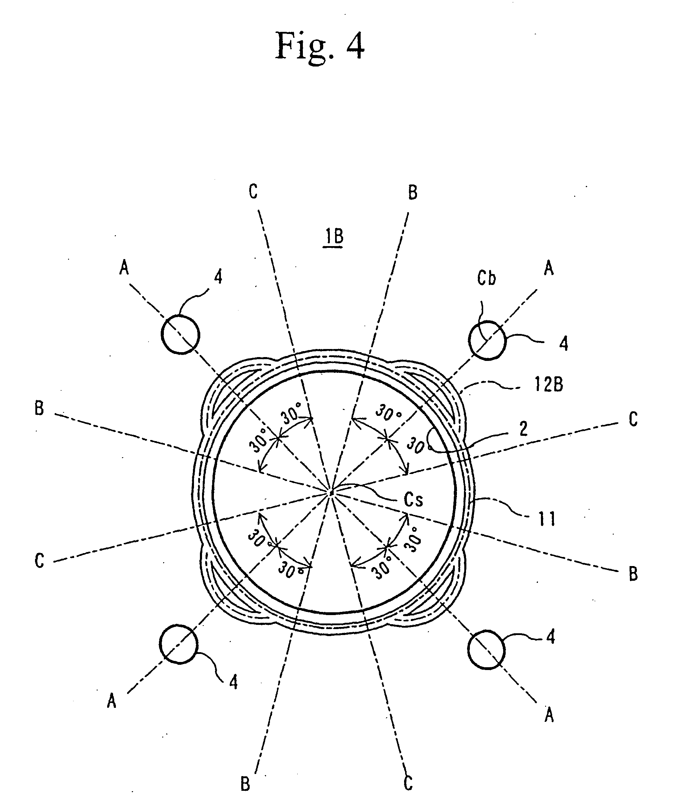

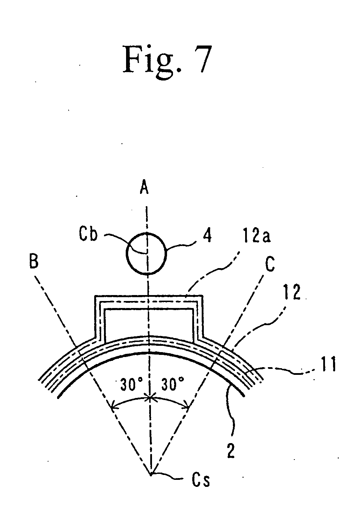

Hereunder, metal laminate gaskets according to the embodiments of the present invention will be explained with reference to the drawings. Figs. 1 to 7 are explanatory drawings showing a metal gasket 1 with cylinder bores, main beads, and secondary beads having sizes larger than actual sizes to easily understand.

The metal gasket according to the present invention is a cylinder head gasket disposed between a cylinder head and a cylinder block (cylinder body) of an engine, and seals high-temperature and pressure combustion gas in cylinder bores, and fluid such as coolant water in a coolant-water passage and oil in a coolant-oil passage.

As shown in Fig. 1, a metal gasket 1 of the invention is formed of one sheet of a metal substrate 10 such as stainless anneal material (anneal material), stainless thermal refining material (spring steel plate), and a soft steel plate. The metal substrate 10 is manufactured according to shapes of engine members such as the cylinder block, and is provided with cylinder bores (combustion chamber holes) 2, fluid holes 3 for circulation of the coolant water and the engine-oil, and head bolt holes 4 for fastening head bolts.

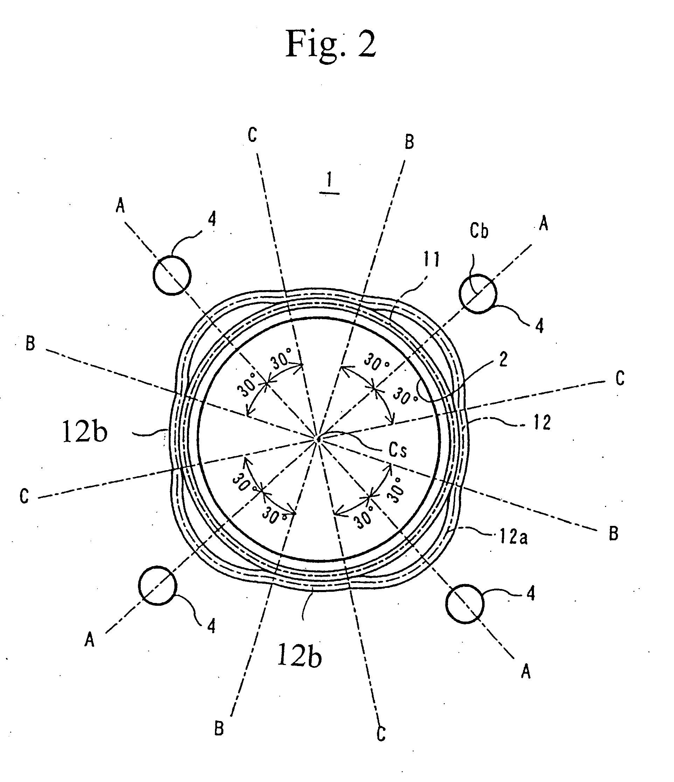

In the metal gasket 1 of a first embodiment of the present invention, as shown in Figs. 1 and 2, around the sealing holes, such as the cylinder bores 2, sealing means such as main bead 11 is provided, and a secondary bead 12 is provided outside the main bead 11. Cross-sectional shapes of the main bead 11 and secondary bead 12 are not specially limited, and formed in the same shapes as those of the widely-known beads generally used such as a corrugated shape, circular arc, triangle, trapezoid, or quadrilateral.

Portions 12a of the secondary bead 12 protrude toward the head bolt holes 4 within a range of 30 degrees on both sides from a center Cs of the cylinder bore 2 in a plan view relative to straight lines A connecting the center Cs of the cylinder bore 2 and centers Cb of the head bolt holes 4 surrounding the cylinder bore 2 (ranges between straight lines B and the straight lines A, and the straight lines A and straight lines C).

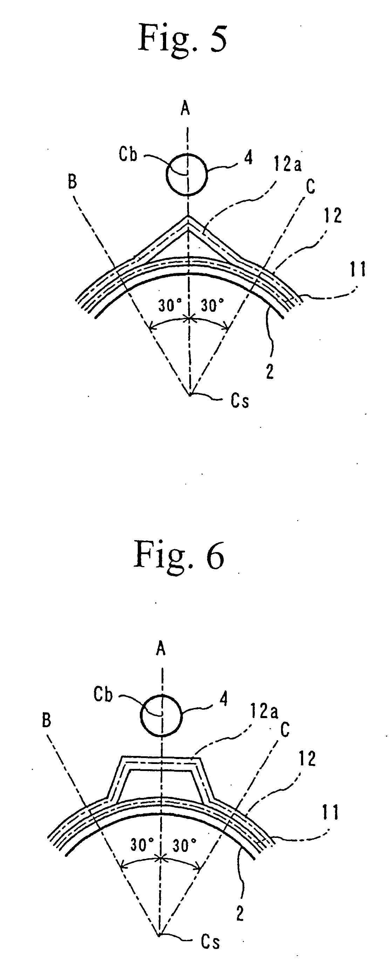

The shape of the portion 12a protruding toward the head bolt hole 4 of the secondary bead 12 is not specially limited. It is preferably formed in a circular arc as shown in Fig. 2, or a triangle, trapezoid, or quadrilateral in the plan view as shown in Figs. 5 to 7, in order to correspond to a distribution of load applied to the metal gasket 1 when the head bolts are fastened. When one of the shapes or a combination thereof is selected in advance, it is possible to easily design and manufacture with accuracy due to a simple shape.

In the first embodiment, the secondary bead 12 is formed separately from the main bead 11, and includes the protruding portions 12a and base portions 12b connecting the protruding portions 12a together.

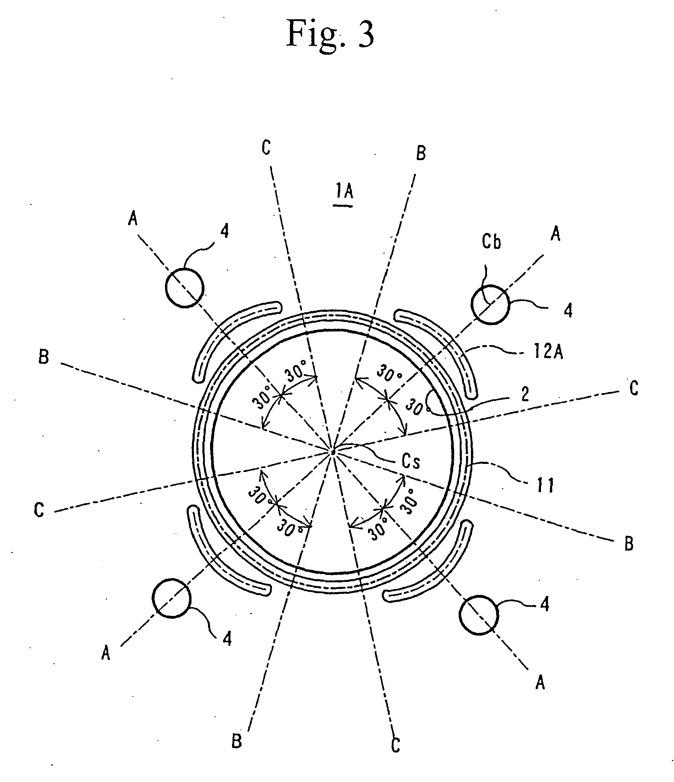

As shown in Fig. 3, in a metal gasket 1A of a second embodiment of the invention, the main bead 11 is provided as the sealing means around the sealing-target hole such as the cylinder bore 2, and secondary beads 12A protruding toward the head bolt holes 4 are partially provided outside the main bead 11.

Relative to the straight lines A connecting the center Cs of the cylinder bore 2 and the centers Cb of the head bolt holes 4 surrounding the cylinder bores 2, the secondary beads 12A are partially provided within the range of 30 degrees on the both sides from the center Cb of the cylinder bore 2 in the plan view (ranges between the straight lines B and the straight lines A, and the straight lines A and the straight lines C).

Similar to the shapes of the protruding portions 12a in the first embodiment, shapes of the secondary beads 12A are not specially limited. They are preferably formed in a circular arc, triangle, trapezoid, or quadrilateral in the plan view, in order to correspond to a distribution of load applied to the metal gasket 1 when the head bolts are fastened.

In a metal gasket 1B of a third embodiment of the invention, secondary beads 12B protruding toward the head bolt holes 4 are partially provided outside of the main bead 11 similar to the metal gasket 1A of the second embodiment. Both ends of the partially providing secondary beads 12B are joined to the main bead 11, respectively. Other structures are the same as those of the metal gasket 1A of the second embodiment.

According to the metal gaskets 1, 1A, and 1B with the above-mentioned structures, the secondary beads 12 and 12A separate from the main beads 11 provided around the cylinder bores 2, or the secondary beads 12B diverged from the main bead 11 reduce an influence of a tightening force of the head bolt. As a result, without affecting sealing performance of the main beads 11, a deformation of a cylinder can be reduced.

Especially, in the plan view, a part or all of the secondary beads 12, 12A, and 12B protrude toward the head bolt holes 4, and tops of the protruding portions of the secondary beads 12, 12A, and 12B are located near the head bolt holes 4 where the influence of the tightening force of the head bolt is large. Accordingly, an effect of compressive resistance due to the secondary beads 12, 12A, and 12B can be enhanced.

In addition, when shims are used instead of the secondary beads 12 and 12B, the same effect can be obtained.

In the above explanation, the metal gasket is formed by one metal substrate. The present invention is not limited to this embodiment, and can be applied to a laminate-type metal gasket with a number of laminated metal substrates.

The disclosure of Japanese Patent Application No. 2004-215409, filed on July 23, 2004, is incorporated in the application.

## Claims

1. A metal gasket (1, 1A, 1B) for sealing between a cylinder head and a cylinder block of an engine, comprising:
a metal plate (10) having a cylinder bore (2) and at least one bolt hole (5) formed around the cylinder bore, and
a main bead (11) provided around the cylinder bore,
said metal gasket being **characterized in that** a secondary bead (12, 12A, 12B) is provided outside the main bead, said secondary bead having a protruding portion protruding toward the bolt hole in plan view within a range of 30 degrees on two sides of a straight line connecting the center of the cylinder bore and a center of the bolt hole.

2. A metal gasket (1, 1A) according to claim 1, wherein said secondary bead (12, 12A) is formed separately from the main bead and located outside the main bead.

3. A metal gasket (1B) according to claim 1, wherein said secondary bead includes end portions connected to the main bead (11) so that the secondary bead protrudes from the main bead.

4. A metal gasket (1) according to claim 1 or 2, wherein said secondary bead (12) includes a plurality of protruding portions (12a), and a plurality of base portions (12b) connecting the protruding portions, said protruding portions being formed concentrically with the main bead.

5. A metal gasket (1) according to claim 4, wherein said main bead and base portions are formed continuously.

6. A metal gasket (1, 1A, 1B) according to any one of claims 1 to 5, wherein said protruding portion has a shape (12a) including one of an arc, a rectangular, a trapezoid, and a quadrilateral in plan view.
